# EUROPÄISCHE PATENTANMELDUNG

(11) **EP 2 359 736 A2**
(43) Veröffentlichungstag der Anmeldung: **24.08.2011**
(21) Anmeldenummer: 11150678.8
(22) Anmeldetag: 12.01.2011
(51) Int. Cl.: A47L 15/42

(54) **Desinfektionsmodul für eine Geschirrspülmaschine**

(30) Priorität: 28.01.2010 DE 102010001342
(71) Anmelder: BSH Bosch und Siemens Hausgeräte GmbH, 81739 München (DE)
(72) Erfinder: Jerg, Helmut, 89537 Giengen (DE); Rosenbauer, Michael Georg, 86756 Reimlingen (DE)

(57) **Zusammenfassung**

Vorgeschlagen wird ein Desinfektionsmodul zur Desinfektion von Rohwasser (RW) für eine Geschirrspülmaschine (1), insbesondere von Rohwasser (RW) für eine Haushaltsgeschirrspülmaschine (1), wobei es als eine außerhalb der Geschirrspülmaschine (1), insbesondere separat, anordenbare Baueinheit (2) ausgeführt ist, welche einen Rohwasserzulauf (15), der zur Aufnahme von Rohwasser (RW) mit einer externen Wasserversorgung (WH) verbindbar ist, eine Desinfektionseinrichtung (17) zur Desinfektion des aufgenommenen Rohwassers (RW), sowie einen Rohwasserablauf (16), der zur Abgabe des desinfizierten Rohwassers (RW) mit der Geschirrspülmaschine (1) verbindbar ist, umfasst.

## Beschreibung

Die vorliegende Erfindung betrifft ein Desinfektionsmodul zur Desinfektion von Rohwasser für eine Geschirrspülmaschine, insbesondere von Rohwasser für eine Haushaltsgeschirrspülmaschine.

Bei den heute üblichen Geschirrspülmaschinen ist eine Reinigung von Spülgut, insbesondere eine Reinigung von Geschirr, unter Verwendung einer Spülflüssigkeit vorgesehen. Dabei wird unter einer Spülflüssigkeit, auch Spülflotte genannt, eine Flüssigkeit verstanden, welche dazu vorgesehen ist, auf das Spülgut aufgebracht zu werden, um dieses zu reinigen und/oder in anderer Weise zu behandeln. Eine Spülflüssigkeit besteht in aller Regel zu einem überwiegenden Teil aus Wasser, wobei die Spülflüssigkeit je nach Betriebsphase der Geschirrspülmaschine mit Reinigungsmitteln, mit Reinigungshilfsmitteln, Klarspülmitteln, und/oder sonstigen Zusatzstoffen wie z.B. Salzen, Enthärtern, und/oder mit Schmutz, der vom Spülgut gelöst wurde, angereichert sein kann.

Das zur Bildung einer derartigen Spülflüssigkeit erforderliche Rohwasser wird dabei üblicherweise von einer externen Wasserversorgung, beispielsweise von einer gebäudeseitig installierten Wasserinstallation, bezogen.

Während es mit den heute üblichen Geschirrspülmaschinen in aller Regel gelingt, sichtbaren Schmutz, wie beispielsweise Speisereste, im Wesentlichen vom Spülgut zu entfernen, bleiben häufig unsichtbare oder kaum sichtbare Schmutzreste am Spülgut und im Inneren der Geschirrspülmaschine zurück.

Nachteilig bei derartigen mit dem bloßen menschlichen Auge kaum sichtbaren oder unsichtbaren Verschmutzungen ist es, dass diese, gerade wenn sie an Essgeschirr auftreten, zu Hygieneproblemen, insbesondere ggf. sogar zu gesundheitlichen Gefahren und/oder Geruchsproblemen führen können.

Der Erfindung liegt die Aufgabe zugrunde, die Hygieneverhältnisse für eine Geschirrspülmaschine zu verbessern.

Diese Aufgabe wird durch ein Desinfektionsmodul der eingangs genannten Art gelöst, welches als eine außerhalb der Geschirrspülmaschine, insbesondere separat, anordenbare Baueinheit ausgeführt ist, welche einen Rohwasserzulauf, der zur Aufnahme von Rohwasser mit einer externen Wasserversorgung verbindbar ist, eine Desinfektionseinrichtung zur Desinfektion des aufgenommenen Rohwassers, sowie einen Rohwasserablauf, der zur Abgabe des desinfizierten Rohwassers mit der Geschirrspülmaschine verbindbar ist, umfasst.

Der Erfindung liegt die Erkenntnis zu Grunde, dass für das bloße menschliche Auge unsichtbare oder kaum sichtbare Verschmutzungen wenigstens teilweise auf Mikroorganismen zurückzuführen sind, welche durch die Geschirrspülmaschine mit dem Rohwasser aufgenommen werden, welches durch die Geschirrspülmaschine von einer externen Wasserversorgung, insbesondere zur Bildung einer Spülflüssigkeit, bezogen wird. Mikroorganismen sind dabei Kleinstlebewesen, zu denen beispielsweise Bakterien, Archaeen, Pilze, Mikroalgen, Protozoen und Viren, usw. zählen. Bereits das Rohwasser kann je nach Qualität der Wasserversorgung Mikroorganismen in gesundheitsgefährdendem Ausmaß aufweisen. Dies kann insbesondere z.B. in Schwellenländern der Fall sein, die noch nicht über ein ausreichend hygienisch betriebenes Wassernetz verfügen. Aufgenommene Mikroorganismen könnten sich zudem in vielen Fällen nach der Aufnahme des Rohwassers im Inneren der Geschirrspülmaschine vermehren. Dadurch könnten am Spülgut und/oder im Inneren der Geschirrspülmaschine für das bloße menschliche Auge unsichtbare oder kaum sichtbare Beläge entstehen, welche durch die Mikroorganismen und/oder durch deren Stoffwechselprodukte gebildet sein können.

Das erfindungsgemäße Desinfektionsmodul weist eine Desinfektionseinrichtung auf, welche die Anzahl der im Rohwasser enthaltenen Mikroorganismen um einen hohen Faktor, beispielsweise im Bereich von 10⁴ bis 10⁶, reduzieren kann. Die Reduktion kann dabei sowohl Mikroorganismen im aktiven Stadium als auch deren Keime betreffen. Die Desinfektionseinrichtung ist dabei zwischen einem Rohwasserzulauf des Desinfektionsmoduls und einem Rohwasserablauf des Desinfektionsmoduls derart angeordnet, dass das Rohwasser beim Hindurchtreten durch das Desinfektionsmodul desinfiziert wird. Dadurch kann die Hygienesituation bereits im Zulauf der Geschirrspülmaschine und dann natürlich auch in den wasserführenden Komponenten der Geschirrspülmaschine, insbesondere in deren Spülbehälter, verbessert werden.

Der Rohwasserzulauf des Desinfektionsmoduls ist so ausgebildet, dass er mit derjenigen externen Wasserversorgung verbindbar ist, welche zur Entnahme von Rohwasser für die Geschirrspülmaschine vorgesehen ist. Bei der externen Wasserversorgung kann es sich insbesondere um einen Wasserhahn einer gebäudeseitigen Wasserinstallation handeln. Der Rohwasserablauf des Desinfektionsmoduls ist hingegen so ausgebildet, dass er mit einer Wasserzulaufeinrichtung der zu versorgenden Geschirrspülmaschine verbindbar ist. Die Wasserzulaufeinrichtung einer Geschirrspülmaschine dient dazu, Rohwasser in das Innere der Geschirrspülmaschine zu leiten, so dass es dort zum Spülen von Spülgut verwendet werden kann. Sie umfasst insbesondere einen Zulaufschlauch, der eingangsseitig ein steuerbares Zulaufventil, bevorzugt Aquastopventil aufweist.

Das Desinfektionsmodul kann nach einer vorteilhaften Ausführungsvariante mit seinem eingangsseitigen Anschluss vorzugsweise am hausanschlussseitigen Wasserhahn angekoppelt werden, insbesondere angeschlossen werden. Sein ausgangsseitiger Anschluss ist vorzugsweise mit dem steuerbaren Zulaufventil, bevorzugt Aquastopventil des Zulaufschlauchs verbunden.

Da verallgemeinert ausgedrückt das Desinfektionsmodul zwischen der externen Wasserversorgung und der Geschirrspülmaschine als insbesondere separate bzw. eigenständige Baueinheit angeordnet ist, kann die im durch die Geschirrspülmaschine aufgenommenen Rohwasser enthaltene Zahl von Mikroorganismen wirksam gesenkt werden. Auf diese Weise kann insbesondere die Ausgangspopulation der in der Geschirrspülmaschine vermehrungsfähigen Mikroorganismen verringert werden. Hierdurch kann die Bildung von mit dem bloßen menschlichen Auge kaum sichtbaren oder unsichtbaren störenden Belägen am Spülgut oder im Inneren der Geschirrspülmaschine, welche zu Hygieneproblemen führen, insbesondere gesundheitsgefährdend und/oder geruchsbildend, sein könnten, stark vermindert werden.

Das erfindungsgemäße Desinfektionsmodul ist dabei als eigene Baueinheit ausgeführt, welche außerhalb, insbesondere außerhalb eines etwaig vorhandenen Gehäuses, der Geschirrspülmaschine vorzugsweise separat anordenbar ist. Durch die Ausbildung des Desinfektionsmoduls als externe, insbesondere separate bzw. eigenständige Baueinheit kann die Desinfektion in unmittelbarer räumlicher Nähe der Geschirrspülmaschine erfolgen. Hierbei kann auf längere Leitungen zwischen dem Desinfektionsmodul und der Geschirrspülmaschine verzichtet werden, was einem Wiederanstieg der Zahl der Mikroorganismen im desinfizierten Rohwasser während dessen Transports zur Geschirrspülmaschine entgegenwirkt. Zudem kann der Zeitpunkt der Desinfektion auf den Zeitpunkt eines Rohwasserbedarfs der Geschirrspülmaschine abgestimmt werden, so dass eine längere Lagerung des bereits desinfizierten Rohwassers vermieden werden kann, was ebenfalls einem Wiederanstieg der Zahl der Mikroorganismen im desinfizierten Rohwasser entgegenwirkt. Aus diesen Gründen kann mit dem erfindungsgemäßen Desinfektionsmodul eine bessere Wirkung erzielt werden, als dies mit Desinfektionsvorrichtungen möglich ist, welche an zentraler Stelle in die gebäudeseitige Wasserversorgung integriert sind, um mehrere Verbraucher mit desinfiziertem Wasser zu versorgen. Dies gilt insbesondere bei höheren Umgebungstemperaturen, welche einer Vermehrung von Mikroorganismen förderlich sind.

Da das erfindungsgemäße Desinfektionsmodul als außerhalb, insbesondere des Gehäuses, der Geschirrspülmaschine, vorzugsweise separat, anordenbare Baueinheit ausgeführt ist, kann es bei bekannten Geschirrspülmaschinen verwendet werden, ohne dass diese in konstruktiver Hinsicht wesentlich angepasst werden müssten. Insbesondere ist es nicht erforderlich, die Konstruktion der bekannten Geschirrspülmaschinen so zu ändern, dass ein freier Bauraum zur Aufnahme des Desinfektionsmoduls entsteht. Das erfindungsgemäße Desinfektionsmodul kann insbesondere auch bei Geschirrspülmaschinen wie z.B. Einbau- Geschirrspülmaschinen, mit kompakten Außenabmessungen verwendet werden, welche einen Einbau eines Desinfektionsmoduls nicht erlauben würden.

Das erfindungsgemäße Desinfektionsmodul kann beispielsweise zwischen der Rückseite der Geschirrspülmaschine und einer gebäudeseitigen Wand angeordnet werden. Wenn die Geschirrspülmaschine in eine Küchenzeile integriert ist, kann das Desinfektionsmodul insbesondere in einem Sockelbereich der Küchenzeile unterhalb der Geschirrspülmaschine oder in einem der Geschirrspülmaschine benachbarten Schrank untergebracht werden.

Gemäß einer zweckmäßigen Weiterbildung der Erfindung kann vorgesehen sein, dass die Desinfektionseinrichtung zur Desinfektion des Rohwassers nach einem physikalischen Prinzip ausgebildet ist. Unter einem physikalischen Prinzip wird dabei ein Desinfektionsprinzip verstanden, welches Mikroorganismen im Wesentlichen durch eine physikalische Einwirkung unschädlich macht. Beispielsweise zählen zu den physikalischen Verfahren solche Verfahren, bei denen das Rohwasser bestrahlt und/oder erhitzt wird. Im Gegensatz zu chemischen Desinfektionsprinzipien, bei denen die Desinfektion im Wesentlichen durch Zugabe einer desinfizierenden Chemikalie, wie beispielsweise Chlor, Jod und dergleichen, erfolgt, brauchen bei einem physikalischen Verfahren dem Rohwasser keine potentiell schädlichen Stoffe zugegeben werden. Zudem vereinfacht sich der Aufbau des Desinfektionsmoduls, da keine Bevorratungseinrichtung oder Dosiereinrichtung für eine desinfizierende Chemikalie erforderlich ist.

Nach einer vorteilhaften Weiterbildung der Erfindung weist die Desinfektionseinrichtung vorzugsweise eine UV-Strahlungsquelle zur Bestrahlung des aufgenommenen Rohwassers auf. Durch eine Bestrahlung des Rohwassers mit UV-Strahlung können im Rohwasser enthaltene Mikroorganismen in einfacher Weise durch physikalische Einwirkung unschädlich gemacht werden.

Gemäß einer zweckmäßigen Weiterbildung der Erfindung umfasst die UV-Strahlungsquelle wenigstens eine Gasentladungslampe. Gasentladungslampen erlauben bei geringen Abmessungen die Erzeugung einer vergleichsweise intensiven UV-Strahlung. Dabei kann ein hoher Wirkungsgrad erzielt werden.

Nach einer besonders vorteilhaften Weiterbildung der Erfindung umfasst die UV-Strahlungsquelle wenigstens eine UV-Leuchtdiode. Hierdurch können die Abmessungen der Desinfektionseinrichtung weiter verringert und der Wirkungsgrad bei der Erzeugung der UV-Strahlung weiter erhöht werden.

Nach einer vorteilhaften Weiterbildung der Erfindung weist die Desinfektionseinrichtung vorzugsweise eine UV-strahlungsdurchlässige Leitung auf, welche eingangsseitig mit dem Rohwasserzulauf verbunden ist, und welche in einem Strahlungsbereich der UV-Strahlungsquelle angeordnet ist. Hierdurch ist in einfacher Weise sichergestellt, dass das Rohwasser unmittelbar nach dem Verlassen des Rohwasserzulaufs bestrahlt und damit desinfiziert wird. Die UV-strahlungsdurchlässige Leitung kann beispielsweise als Glasrohr ausgebildet sein.

Gemäß einer zweckmäßigen Weiterbildung der Erfindung weist das Desinfektionsmodul wenigstens einen Anschluss zum Anschließen einer mit einer Steuereinrichtung der Geschirrspülmaschine verbundenen Steuerleitung auf. Die heute üblichen Geschirrspülmaschinen umfassen eine Steuereinrichtung zur Steuerung von Spülgängen zum Reinigen von Spülgut. Derartige Steuereinrichtung können insbesondere als Ablaufsteuereinrichtung ausgebildet sein, welche zur Steuerung eines Ablaufs eines Spülgangs anhand von mindestens einem auswählbaren Spülprogramm ausgebildet ist.

Durch die vorgesehene Steuerleitung zwischen der Steuereinrichtung der Geschirrspülmaschine und dem Desinfektionsmodul ist es möglich, die Funktion des Desinfektionsmoduls an den Ablauf des jeweilig durchzuführenden Spülgangs der Geschirrspülmaschine anzupassen. Insbesondere kann so die Aufnahme des Rohwassers durch das Desinfektionsmodul, die Desinfektion des Rohwassers und/oder die Abgabe des desinfizierten Rohwassers an den Wasserbedarf der Geschirrspülmaschine im Verlauf eines Spülgangs angepasst werden. Es ist insbesondere möglich, die Aufnahme des Rohwassers durch das Desinfektionsmodul, die Desinfektion des Rohwassers, die Bereitstellung des hygienisch aufbereiteteten Rohwassers und/oder die Abgabe des desinfizierten Rohwassers an die jeweilige Wasserzudosiermenge, die für den jeweiligen Teilspülgang eines ablaufenden Spülgangs eines gewählten Geschirrspülprogramms gefordert ist, teilspülgang-spezifisch, d.h. in Abhängigkeit vom jeweiligen Teilspülgang, durchzuführen.

Nach einer vorteilhaften Weiterbildung der Erfindung ist der Steuer- Anschluss mit einem Aktor des Desinfektionsmoduls verbunden. Unter Aktoren werden dabei insbesondere steuerbare technische Elemente des Desinfektionsmoduls, wie z. B. Ventile, Pumpen und/oder UV-Strahlungsquellen, verstanden. Hierdurch kann die Steuereinrichtung der Geschirrspülmaschine auf einfache Weise unmittelbar in die Funktion des Desinfektionsmoduls eingreifen. Dies erleichtert die Abstimmung, insbesondere Synchronisation, der Abläufe des Desinfektionsmoduls und der Geschirrspülmaschine. Ggf. kann sogar darauf verzichtet werden, das Desinfektionsmodul mit einer eigenen Steuereinrichtung zu versehen.

Gemäß einer vorteilhaften Weiterbildung der Erfindung ist der Anschluss mit einer Steuereinrichtung des Desinfektionsmoduls verbunden. Hierdurch wird ein Zusammenwirken der Steuereinrichtung des Desinfektionsmoduls mit der Steuereinrichtung der Geschirrspülmaschine möglich. Die Ausrüstung des Desinfektionsmoduls mit einer eigenen Steuereinrichtung ermöglicht es, dass das Desinfektionsmodul zumindest einzelne Funktionen autark, d.h. unabhängig von der Steuereinrichtung der Geschirrspülmaschine ausüben kann. Zudem kann der Verkabelungsaufwand zwischen dem Desinfektionsmodul und der Geschirrspülmaschine verringert werden, falls das Desinfektionsmodul eine Vielzahl von zu steuernden Aktoren aufweist.

Nach einer vorteilhaften Weiterbildung der Erfindung ist das Desinfektionsmodul vorzugsweise als Durchlaufdesinfektionsmodul ausgebildet. Unter einem Durchlaufdesinfektionsmodul wird dabei ein Desinfektionsmodul verstanden, bei dem das Rohwasser desinfiziert werden kann, während es in einem abgeschlossenen Leitungssystem ohne Zwischenspeicherung vom Rohwasserzulauf zum Rohwasserablauf fließt. Hierdurch sind die Aufnahme von Rohwasser, die Desinfektion des Rohwassers und die Abgabe des Rohwassers praktisch ohne Zeitverzug möglich. Die Desinfektion des Rohwassers kann damit auch zeitgleich mit der Aufnahme des Rohwassers durch die Geschirrspülmaschine erfolgen. Probleme, die z.B. durch eine unzulässig lange Verweildauer des desinfizierten Rohwassers in einem Vorratsbehälter auftreten könnten, sind somit von vornherein durch das Durchlaufprinzip vermieden, da das Wasser nach seiner Desinfizierung für den jeweiligen Teilspülgang sofort und vorzugsweise kontinuierlich bzw. fortlaufend in die Geschirrspülmaschine einläuft, so dass ein Wiederanstieg der Zahl der Mikroorganismen zwischen dem Desinfektionsvorgang des Rohwassers und dem Beschickungsvorgang der Geschirrspülmaschine mit dem desinfizierten Rohwasser praktisch nicht eintreten kann.

Gemäß einer vorteilhaften Weiterbildung der Erfindung kann es jedoch ggf. auch zweckmäßig sein, einen Vorratsbehälter zum Speichern von aufgenommenem Rohwasser vorzusehen. Ein derartiger Vorratsbehälter ermöglicht es, desinfiziertes Rohwasser zu bevorraten und bei Bedarf abzugeben. Auf diese Weise kann die Abgabe von desinfiziertem Rohwasser mit einer größeren Geschwindigkeit erfolgen als dies bei einem Durchlaufdesinfektionsmodul der Fall ist, so dass der Ablauf eines Spülgangs der Geschirrspülmaschine beschleunigt werden kann. Der Grund hierfür liegt darin, dass bei dem Durchlaufdesinfektionsmodul die Abgabegeschwindigkeit durch die maximale Geschwindigkeit des Rohwassers limitiert ist, bei der eine wirksame Desinfektion des Rohwassers gewährleistet ist. Bei dem mit dem Vorratsbehälter ausgerüsteten Desinfektionsmodul hingegen kann die Aufnahme des Rohwassers hinreichend lange vor der Abgabe des Rohwassers erfolgen, so dass auch mit einer leistungsschwächeren Desinfektionseinrichtung eine hinreichende Desinfektion möglich ist.

Gemäß einer zweckmäßigen Weiterbildung der Erfindung ist die Desinfektionseinrichtung stromaufwärts des Vorratsbehälters angeordnet. Auf diese Weise kann eine Verunreinigung des Vorratsbehälters mit Mikroorganismen vermieden werden. Alternativ könnte die Desinfektionseinrichtung im Vorratsbehälter angeordnet sein.

Nach einer zweckmäßigen Weiterbildung der Erfindung weist der Vorratsbehälter vorzugsweise ein Volumen auf, welches der für den jeweilig wasserführenden Teilspülgang der Geschirrspülmaschine spezifisch erforderlichen Wassermenge entspricht. Unter einem wasserführenden Teilspülgang wird dabei eine Phase eines Spülgangs zum Reinigen von Spülgut verstanden, während der das Spülgut mit Spülflüssigkeit behandelt wird. Ein Spülgang umfasst in der Regel mehrere wasserführende Teilspülgänge, wobei beispielsweise ein Vorspülgang, ein Reinigungsspülgang, ein Zwischenspülgang und ein Klarspülgang vorgesehen sein kann. Wenn nun das Volumen des Vorratsbehälters im Wesentlichen der spezifischen Menge des für den jeweilig wasserführenden Teilspülgang vorgesehenen Rohwassermenge entspricht, so kann die gesamte erforderliche Rohwassermenge vorab desinfiziert und bei Bedarf schnell abgegeben werden. Auf der anderen Seite wird eine Überdimensionierung des Vorratsbehälters vermieden.

Gemäß einer zweckmäßigen Weiterbildung der Erfindung beträgt das Volumen des Vorratsbehälters zwischen 2 Liter und 8 Liter, bevorzugt zwischen 2,5 Liter und 6 Liter, besonders bevorzugt zwischen 3 Liter und 4 Liter. Auf diese Weise kann der Wasserbedarf üblicher wasserführender Teilspülgänge ohne Überdimensionierung des Vorratsbehälters in aller Regel gedeckt werden.

Nach einer zweckmäßigen Weiterbildung der Erfindung weist der Rohwasserzulauf ein steuerbares Zulaufventil, insbesondere Aquastopventil auf. Hierdurch kann die Aufnahme des Rohwassers über den Rohwasserzulauf, insbesondere zur Befüllung des Vorratsbehälters, bedarfsgerecht gesteuert werden. Das Zulaufventil kann dabei von der Steuereinrichtung des Desinfektionsmoduls oder von der Steuereinrichtung der Geschirrspülmaschine angesteuert, insbesondere geöffnet und geschlossen werden.

Nach einer zweckmäßigen Weiterbildung der Erfindung kann insbesondere vorgesehen sein, dass das Zulaufventil an einem stromaufwärtigen Ende eines Zulaufschlauchs des Desinfektionsmoduls angeordnet und so ausgebildet ist, dass es an einem Anschlussstück der externen Warmwasserversorgung befestigbar ist. Das Zulaufventil kann hierzu beispielsweise ein Anschlussgewinde aufweisen, welches mit einem Gewinde von haushaltsüblichen Wasserhähnen korrespondiert. Derartige Ventile können insbesondere als Aquastop-Ventile ausgebildet sein.

Die Anordnung des Zulaufventils am stromaufwärtigen Ende der Wasserzulaufeinrichtung weist den Vorteil auf, dass aus dem Desinfektionsmodul auch in einem Schadensfall praktisch kein Leckwasser austreten kann, solange das Zulaufventil geschlossen ist. Wenn das Zulaufventil so ausgeführt ist, dass es schließt, wenn es nicht angesteuert ist, ist ein größerer Austritt von Leckwasser aus einem abgeschalteten Desinfektionsmodul praktisch in allen Fällen verhindert.

Nach einer vorteilhaften Weiterbildung der Erfindung kann ein Leckwassersensor vorgesehen sein. Ein derartiger Sensor ist zum Erfassen von im Bereich des Desinfektionsmoduls austretendem Leckwasser vorgesehen. Er kann beispielsweise an einer in einem Bodenbereich des Desinfektionsmoduls vorgesehenen Leckwasserauffangwanne angeordnet sein. Der Leckwassersensor kann insbesondere mit der Steuereinrichtung des Desinfektionsmoduls und/oder vorzugsweise mit der Steuereinrichtung der Geschirrspülmaschine verbunden sein, so dass die jeweilige Steuereinrichtung das Desinfektionsmodul bei erkanntem Leckwasser abschalten kann. Insbesondere kann sie das Desinfektionsmodul stromlos setzen und das Zulaufventil schließen. Auf diese Weise kann auch ein größerer Austritt von Leckwasser bei einem zunächst eingeschalteten Desinfektionsmodul verhindert werden.

Nach einer zweckmäßigen Weiterbildung der Erfindung kann dem Vorratsbehälter ein Füllstandssensor zugeordnet sein. Der Füllstandssensor kann mit der Steuereinrichtung des Desinfektionsmoduls oder mit der Steuereinrichtung der Geschirrspülmaschine verbunden sein. Auf diese Weise kann die aktuelle Befüllung des Vorratsbehälters mit dem zu erwartenden Wasserbedarf der Geschirrspülmaschine verglichen und gegebenenfalls angepasst werden.

Gemäß einer zweckmäßigen Weiterbildung der Erfindung kann eine Pumpe zum Abpumpen von im Vorratsbehälter gespeichertem Rohwasser vorgesehen sein, welche ausgangsseitig mit dem Rohwasserablauf verbunden ist. Auf diese Weise kann das Desinfektionsmodul das desinfizierte Rohwasser auch dann schnell an die Geschirrspülmaschine abgeben, wenn es nicht unter Druck steht. Dabei kann das Desinfektionsmodul auch tiefer als die Geschirrspülmaschine angeordnet werden. Die Pumpe kann dabei von der Steuereinrichtung des Desinfektionsmoduls oder von der Steuereinrichtung der Geschirrspülmaschine angesteuert werden.

Nach einer vorteilhaften Weiterbildung der Erfindung kann das Desinfektionsmodul insbesondere zur Montage an einer Wand vorbereitet sein. Hierzu kann das Desinfektionsmodul Befestigungsabschnitte aufweisen, welche beispielsweise als Befestigungslaschen ausgebildet sein können. Die Befestigungsabschnitte können Befestigungslöcher und/oder -schlitze zum Befestigen des Desinfektionsmoduls mit Schrauben, Haken oder dergleichen an einer Wand umfassen. Hierdurch ist es in einfacher Weise möglich, das Desinfektionsmodul platzsparend an einer Gebäudewand oder an einer Schrankwand zu befestigen.

Nach einer weiteren zweckmäßigen Weiterbildung der Erfindung kann das Desinfektionsmodul zum Aufstellen auf einer horizontalen Fläche vorbereitet sein. Hierzu können Stellabschnitte, beispielsweise Stellfüße, vorgesehen sein. Hierdurch ist es möglich, das Desinfektionsmodul ohne weitere Befestigung auf einem Boden, beispielsweise einem Gebäudeboden oder Schrankboden, zu platzieren.

Nach einer weiteren zweckmäßigen Weiterbildung der Erfindung kann der Rohwasserzulauf zum Befestigen und Tragen des Desinfektionsmoduls an der externen Wasserversorgung ausgebildet sein. Hierdurch ergibt sich eine besonders einfache Installation des Desinfektionsmoduls.

Nach einer vorteilhaften Weiterbildung der Erfindung weist das Desinfektionsmodul ein im Wesentlichen geschlossenes Gehäuse auf. Das Gehäuse kann insbesondere dem Schutz des Desinfektionsmoduls vor Schmutz und/oder Beschädigung dienen. Ein derartiges Gehäuse erlaubt die Platzierung des Desinfektionsmoduls unabhängig vom Vorhandensein von schützenden Schränken und dergleichen. Hierdurch werden die Einsatzmöglichkeiten des Desinfektionsmoduls erweitert. Zudem können an dem Gehäuse in einfacher Weise Befestigungsabschnitte zur Wandmontage und/oder Stellabschnitte zum Aufstellen des Desinfektionsmoduls auf einem Boden ausgebildet werden.

Weiterhin betrifft die Erfindung eine Geschirrspülmaschine, insbesondere eine Haushaltsgeschirrspülmaschine, mit einer Steuereinrichtung zur Steuerung von Spülgängen zum Reinigen von Spülgut. Bei dieser Geschirrspülmaschine wird die eingangs gestellte Aufgabe dadurch gelöst, dass sie eine Wasserzulaufeinrichtung aufweist, welche zur Aufnahme von Rohwasser mit einem erfindungsgemäßen Desinfektionsmodul verbindbar ist, wobei die Steuereinrichtung zur Steuerung des Desinfektionsmoduls ausgebildet ist. Auf diese Weise ist es möglich, die Funktion des Desinfektionsmoduls an den Ablauf eines Spülgangs der Geschirrspülmaschine anzupassen. Insbesondere kann so die Aufnahme des Rohwassers durch das Desinfektionsmodul, die Desinfektion des Rohwassers und/oder die Abgabe des desinfizierten Rohwassers an den Wasserbedarf der Geschirrspülmaschine im Verlauf eines Spülgangs, insbesondere spezifisch an die zuzudosierenden Wassermengen dessen Teilspülgänge angepasst werden.

Gemäß einer vorteilhaften Weiterbildung der Erfindung ist die Steuereinrichtung der Geschirrspülmaschine zum Steuern wenigstens eines Aktors des Desinfektionsmoduls ausgebildet. Hierdurch kann die Steuereinrichtung der Geschirrspülmaschine auf einfache Weise unmittelbar in die Funktion des Desinfektionsmoduls eingreifen. Dies kann insbesondere die Synchronisation der Abläufe des Desinfektionsmoduls und der Geschirrspülmaschine erleichtern. Insbesondere können so Desinfektionsmodule gesteuert werden, welche selbst keine eigene Steuereinrichtung aufweisen.

Nach einer vorteilhaften Weiterbildung der Erfindung ist die Steuereinrichtung der Geschirrspülmaschine zur Kommunikation mit einer Steuereinrichtung des Desinfektionsmoduls ausgebildet. Hierdurch kann der Verkabelungsaufwand verringert werden, insbesondere, wenn das Desinfektionsmodul eine Vielzahl von Aktoren aufweist. Zudem ist eine Verteilung der Steuerungsaufgaben möglich.

In einem weiteren Aspekt betrifft die vorliegende Erfindung eine Anordnung mit einer erfindungsgemäß ausgebildeten Geschirrspülmaschine, insbesondere mit einer Haushaltsgeschirrspülmaschine, und mit einem erfindungsgemäß ausgebildeten Desinfektionsmodul zur Desinfektion von Rohwasser für die Geschirrspülmaschine.

Sonstige vorteilhafte Weiterbildungen der Erfindung sind in den Unteransprüchen wiedergegeben.

Die Erfindung und ihre Weiterbildungen sowie deren Vorteile werden nachfolgend anhand von Zeichnungen näher erläutert. Es zeigen jeweils schematisch:
- **Figur 1**: ein vorteilhaftes Ausführungsbeispiel einer erfindungsgemäßen Anordnung in einer schematischen Seitenansicht,
- **Figur 2**: eine Funktionsskizze der Anordnung der Figur 1,
- **Figur 3**: ein weiteres vorteilhaftes Ausführungsbeispiel einer erfindungsgemäßen Anordnung in einer schematischen Seitenansicht, und
- **Figur 4**: eine Funktionsskizze der Anordnung der Figur 3.

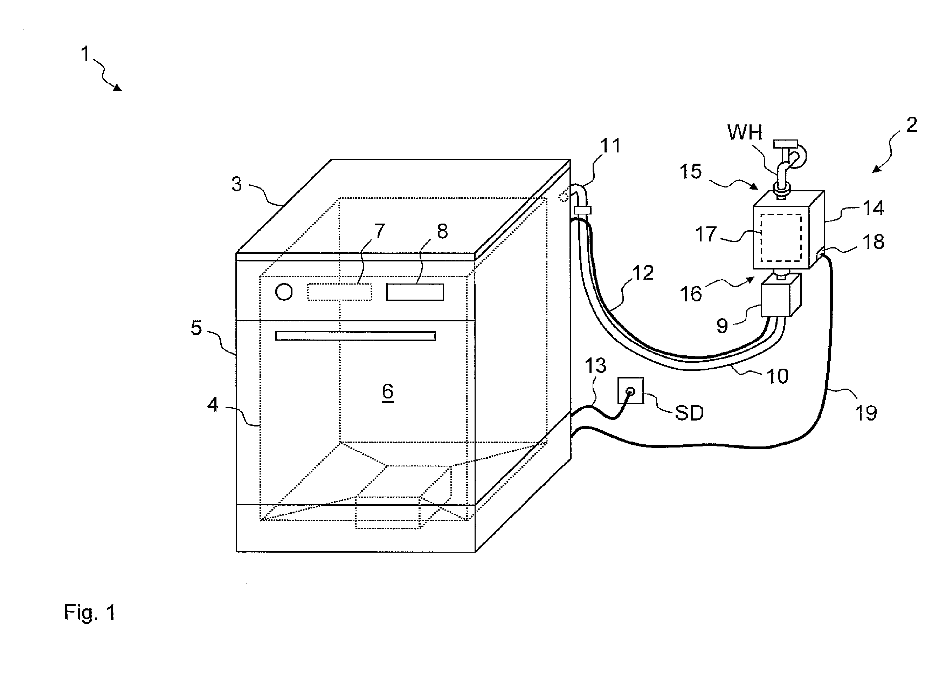

In den folgenden Figuren 1 mit 4 sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Anordnung weitere Teile und Baugruppen umfassen kann.

Figur 1 zeigt ein vorteilhaftes Ausführungsbeispiel einer erfindungsgemäßen Anordnung, welche eine Geschirrspülmaschine 1 und ein Desinfektionsmodul 2 umfasst. Die Geschirrspülmaschine 1 ist zum Reinigen von Spülgut unter Verwendung von Spülflüssigkeit, insbesondere zum Reinigen von Geschirr, ausgebildet.

Die Geschirrspülmaschine 1 weist ein Gehäuse 3 auf, in dem ein Spülbehälter 4 angeordnet ist. Dem Spülbehälter 4 ist eine Tür 5 zugeordnet, welche es ermöglicht, Spülgut in den Spülbehälter 4 einzubringen beziehungsweise daraus zu entnehmen. Bei geschlossener Tür 5 entsteht im Inneren des Spülbehälters 4 eine im Wesentlichen geschlossene Spülkammer 6. Ggf. kann das Außengehäuse 3 teilweise oder ganz entfallen. Dies ist insbesondere bei Einbau-Geschirrspülmaschinen der Fall. Die Außenwandungen der Geschirrspülmaschine können dann zum größten Teil lediglich durch die Wandungen des Spülbehälters gebildet sein.

Die Geschirrspülmaschine 1 umfasst weiterhin eine Steuereinrichtung 7 zur Steuerung von Spülgängen zum Reinigen von Spülgut. Die Steuereinrichtung 7 kann insbesondere als Ablaufsteuereinrichtung ausgebildet sein, welche zur Steuerung eines Ablaufs eines Spülgangs anhand von einem auswählbaren Spülprogramm ausgebildet ist. Die Steuereinrichtung 7 steht in Verbindung mit einer Bedienschnittstelle 8, welche zur Bedienung der Geschirrspülmaschine 1 durch einen Bediener vorgesehen ist. Die Bedienschnittstelle 8 kann neben einer zur Bedienung der Geschirrspülmaschine 1 vorgesehenen Eingabeeinheit auch eine Ausgabeeinheit zur Ausgabe von Informationen an den Bediener umfassen.

Um das zur Bildung einer Spülflüssigkeit zum Spülen von Spülgut erforderliche Rohwasser ins Innere des Gehäuses 3 der Geschirrspülmaschine 1 leiten zu können, ist eine Wasserzulaufeinrichtung 9, 10, 11 vorgesehen. Die Wasserzulaufeinrichtung 9, 10, 11 weist an ihrem stromaufwärtigen Ende ein Zulaufventil 9 auf. Dieses kann insbesondere als sogenanntes Aquastopventil ausgebildet sein. Stromabwärts schließt sich an das Zulaufventil 9 eine Wasserzulaufleitung an, welche vorzugsweise als flexibler Wasserzulaufschlauch 10 ausgebildet ist. An seinem stromabwärtigen Ende ist der Wasserzulaufschlauch 10 insbesondere mit einem gerätefesten, hier insbesondere gehäusefesten Anschlussstück 11 verbunden. Von dort kann das Rohwasser über in Figur 1 nicht gezeigte Mittel in die Spülkammer 6 geleitet werden. Dabei kann es nach Bedarf mit Reinigungsmitteln, Zusatzstoffen wie z.B. Salzen, Enthärtern, und/oder Reinigungshilfsmitteln, und/oder Klarspülmitteln versetzt werden und als Spülflüssigkeit zur Beaufschlagung des Spülguts verwendet werden.

Das Zulaufventil 9 ist über eine Steuerleitung 12 steuerbar, welche außerhalb des Gehäuses 3 entlang dem Wasserzulaufschlauch 10 verläuft. Im Inneren der Geschirrspülmaschine 1, insbesondere des Gehäuses 3 ist die Steuerleitung 12 mit der Steuereinrichtung 7 verbunden, so dass die Aufnahme von Rohwasser durch die Steuereinrichtung 7 in Abhängigkeit von einem Spülprogramm gesteuert werden kann.

Das Zulaufventil 9 ist so ausgeführt, dass es schließt, wenn es nicht angesteuert ist, um so im Schadensfall einen größeren Austritt von Leckwasser aus der Geschirrspülmaschine 1 zu verhindern, wenn diese abgeschaltet ist. Dabei kann die Geschirrspülmaschine 1 einen nicht gezeigten Leckwassersensor aufweisen, der zum Erfassen von im Bereich der Geschirrspülmaschine 1 austretendem Leckwasser vorgesehen ist, während diese eingeschaltet ist. Er kann beispielsweise an einer in einem Bodenbereich der Geschirrspülmaschine 1 vorgesehenen Leckwasserauffangwanne angeordnet sein und mit der Steuereinrichtung 7 der Geschirrspülmaschine verbunden sein, so dass die Steuereinrichtung 7 die Geschirrspülmaschine 1 bei erkanntem Leckwasser abschalten kann. Insbesondere kann sie die Geschirrspülmaschine 1 stromlos setzen und das Zulaufventil 9 schließen. Auf diese Weise kann auch ein größerer Austritt von Leckwasser bei einer zunächst eingeschalteten Geschirrspülmaschine 1 verhindert werden.

Der Wasserzulaufschlauch 10 kann als doppelwandiger Sicherheitsschlauch 10 mit einem inneren wasserführenden Schlauch und einem äußeren Hüllschlauch ausgebildet sein. Tritt aus dem wasserführenden Schlauch Wasser aus, so wird es im Zwischenraum zwischen dem wasserführenden Schlauch und dem Hüllschlauch in Richtung des Leckwassersensors geleitet, so dass auch im Bereich des Wasserzulaufschlauchs 10 austretendes Leckwasser detektiert werden kann, um dann entsprechende Maßnahmen einleiten zu können.

Um die Geschirrspülmaschine 1 mit der erforderlichen elektrischen Energie zu versorgen, ist weiterhin ein Netzkabel 13 vorgesehen, welches bestimmungsgemäß mit einer externen Energieversorgung SD verbunden ist, welche insbesondere als haushaltsübliche Steckdose SD ausgebildet sein kann.

Das Desinfektionsmodul 2 ist außerhalb der Außenwandungen der Geschirrspülmaschine 1 angeordnet und extern als eigenständige bzw. separate Baueinheit 2 ausgebildet, welche ein im Wesentlichen geschlossenes Gehäuse 14 aufweist. Das Gehäuse 14 kann insbesondere tragende Funktion und/oder schützende Funktion aufweisen.

Das Desinfektionsmodul 2 umfasst einen Rohwasserzulauf 15, der bestimmungsgemäß mit einer externen Wasserversorgung, insbesondere deren Wasserhahn WH flüssigkeitsleitend verbunden ist, welche im Beispiel der Figur 1 ein gebäudeseitiger installierter Wasserhahn WH ist. Der Rohwasserzulauf 15 kann dabei an dem Gehäuse 14 angeordnet sein.

Der Anschluss des Rohwasserzulaufs 15 an die externe Wasserversorgung kann als Schraubanschluss, als Bajonettanschluss oder dergleichen ausgeführt sein. Im Ausführungsbeispiel der Figur 1 übt die Verbindung zwischen dem Rohwasserzulauf 15 und der externen Wasserversorgung zudem eine tragende Funktion aus. Das heißt, dass das Desinfektionsmodul 2 an dem Wasserhahn WH befestigt werden kann, so dass auf separate Befestigungsmittel verzichtet werden kann.

Weiterhin umfasst das Desinfektionsmodul einen Rohwasserablauf 16, der bestimmungsgemäß mit einer Eingangsseite des Zulaufventils 9 der Geschirrspülmaschine flüssigkeitsleitend verbunden ist. Auch hier kann die Verbindung als Schraubverbindung, als Bajonettverbindung oder dergleichen mehr ausgebildet sein. Die Verbindung von Zulaufventil 9 und Rohwasserablauf 16 kann dabei hinreichend stabil ausgeführt sein, so dass das Zulaufventil 9 von dem Rohwasserablauf 16 getragen ist.

Zwischen dem Rohwasserzulauf 15 und dem Rohwasserablauf 16 ist eine Desinfektionseinrichtung 17 vorgesehen bzw. eingefügt. Das Desinfektionsmodul 2 ist dabei hier im vorliegenden Ausführungsbeispiel insbesondere als Durchlaufdesinfektionsmodul 2 ausgebildet. So strömt bei geöffnetem Zulaufventil 9 der Geschirrspülmaschine 1 Rohwasser vom Wasserhahn WH über den Rohwasserzulauf 15 durch die Desinfektionseinrichtung 17 und über den Rohwasserablauf 16 zur Geschirrspülmaschine 1. Dabei wird das zuströmende Rohwasser desinfiziert, während es durch die Desinfektionseinrichtung 17 fließt.

Im Ausführungsbeispiel der Figur 1 ist die Desinfektionseinrichtung 17 zur Desinfektion des Rohwassers nach einem physikalischen Prinzip ausgebildet. Hierbei kann die Desinfektion durch einen Eintrag von Energie auf das Rohwasser erfolgen. Um die Desinfektionseinrichtung 17 genau dann zur Wirkung zu bringen, wenn sie von Rohwasser durchströmt wird, weist das Desinfektionsmodul 2 einen Anschluss 18 für eine Steuerleitung 19 auf, welche mit der Steuereinrichtung 7 der Geschirrspülmaschine 1 verbunden ist. Die Steuereinrichtung 7 der Geschirrspülmaschine 1 ist dabei so ausgebildet, dass die Desinfektionseinrichtung 17 genau dann zur Wirkung gebracht wird, wenn das Zulaufventil 9 geöffnet ist. Auf diese Weise ist sichergestellt, dass das von der externen Wasserversorgung WH bereitgestellte Rohwasser durch das Desinfektionsmodul 2 desinfiziert wird, bevor es von der Wasserzulaufeinrichtung 9, 10, 11 ins Innere der Geschirrspülmaschine 1 weitergeleitet wird.

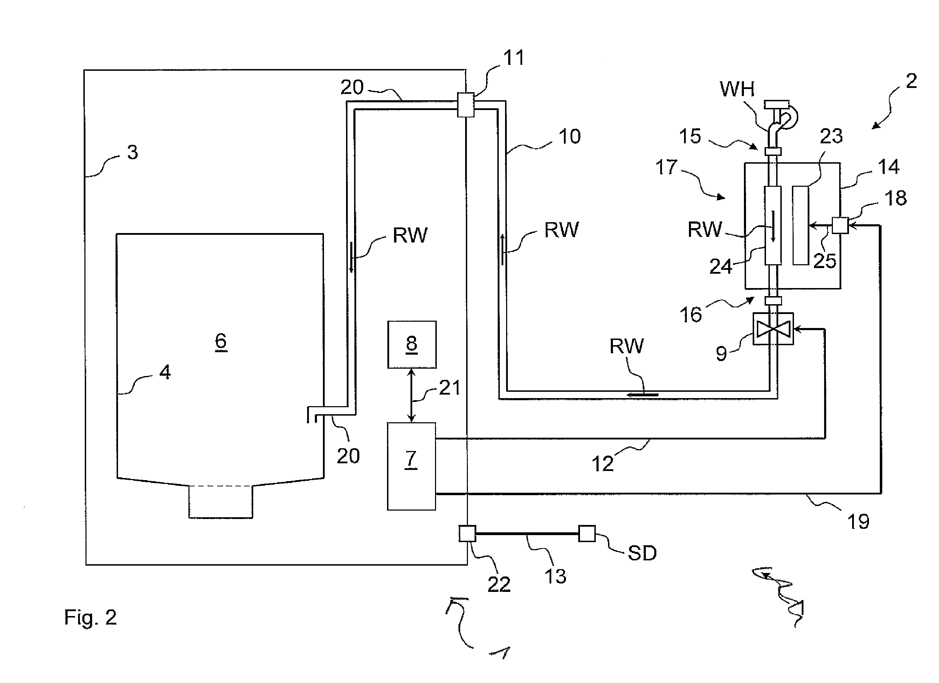

Figur 2 zeigt eine Funktionsskizze der erfindungsgemäßen Anordnung der Figur 1. In Figur 2 ist eine Leitung 20 dargestellt, welche das gerätefest angebrachte Anschlussstück 11 der Wasserzulaufeinrichtung 9, 10, 11 der Geschirrspülmaschine 1 so mit der Spülkammer 6 des Spülbehälters 4 der Geschirrspülmaschine 1 verbindet, dass das zugeführte Rohwasser RW in die Spülkammer 6 geleitet werden kann. Im Bereich der Leitung 20 kann ggf. auch ein nicht gezeigter Zwischenspeicher für einlaufendes, desinfiziertes Rohwasser RW und/oder eine nicht gezeigte Wasserbehandlungseinrichtung, beispielsweise eine Entkalkungs- und/oder Entsalzungseinrichtung, vorgesehen sein.

Die Steuereinrichtung 7 ist über eine Datenleitung 21 mit der Bedienschnittstelle 8 verbunden. Die Datenleitung 21 ist hier im Ausführungsbeispiel zum vorzugsweise bidirektionalen Datenaustausch ausgebildet, so dass von der Bedienschnittstelle 8 Steuerbefehle eines Bedieners zur Steuereinrichtung 7 und in umgekehrter Richtung Zustandsmeldungen von der Steuereinrichtung 7 zur Bedienschnittstelle 8 übertragen werden können, um diese dort zur Information des Bedieners auszugeben.

Das Netzkabel 13 ist mit einem geschirrspülmaschinenseitigen elektrischen Netzanschluss 22 verbunden, von dem aus die Energieverbraucher der Geschirrspülmaschine 1, wie beispielsweise die Steuereinrichtung 7, die Bedienschnittstelle 8, nicht gezeigte Pumpen und/oder Ventile und dergleichen mehr, mit elektrischer Energie versorgt werden.

Bei dem Desinfektionsmodul 2 der Figur 2 erfolgt eine Desinfektion des Rohwassers RW, indem es mit UV-Strahlung beaufschlagt wird. Hierzu ist eine UV-Strahlungsquelle 23 vorgesehen. Diese kann vorzugsweise als Gasentladungslampe ausgebildet sein. Im Strahlungsbereich der UV-Strahlungsquelle 23 ist eine UV-strahlungsdurchlässige Leitung 24 angeordnet, welche beispielweise ein Glasrohr ist. Das Glasrohr 24 ist im Ausführungsbeispiel der Figur 1 zwischen dem Rohwasserzulauf 15 und dem Rohwasserablauf 16 so angeordnet, dass Rohwasser RW, welches das Desinfektionsmodul 2 durchströmt, im Glasrohr 24 durch die UV-Strahlungsquelle 23 mit UV-Strahlung beaufschlagt wird.

Die mit der Steuereinrichtung 7 der Geschirrspülmaschine 1 verbundene Steuerleitung 19 ist über den Anschluss 18 des Desinfektionsmoduls 2 und eine davon abgehende Steuerleitung 25 mit der UV-Strahlungsquelle 23 verbunden. Das Einschalten der UV-Strahlungsquelle 23 kann nun dadurch erfolgen, dass die Steuerleitung 19 und die damit verbundene Steuerleitung 25 durch die Steuereinrichtung mit der für die UV-Strahlungsquelle 23 vorgesehenen Betriebsspannung beaufschlagt wird. Um die UV-Strahlungsquelle 23 abzuschalten, kann die Steuerleitung 19 wieder spannungslos gesetzt werden. Auf diese Weise ist eine einfache Steuerung der Funktion der Desinfektionseinrichtung 17 möglich. Das Desinfektionsmodul 2 benötigt hierbei weder eine eigene Steuereinrichtung noch eine eigene Verbindung zu einer externen Energieversorgung.

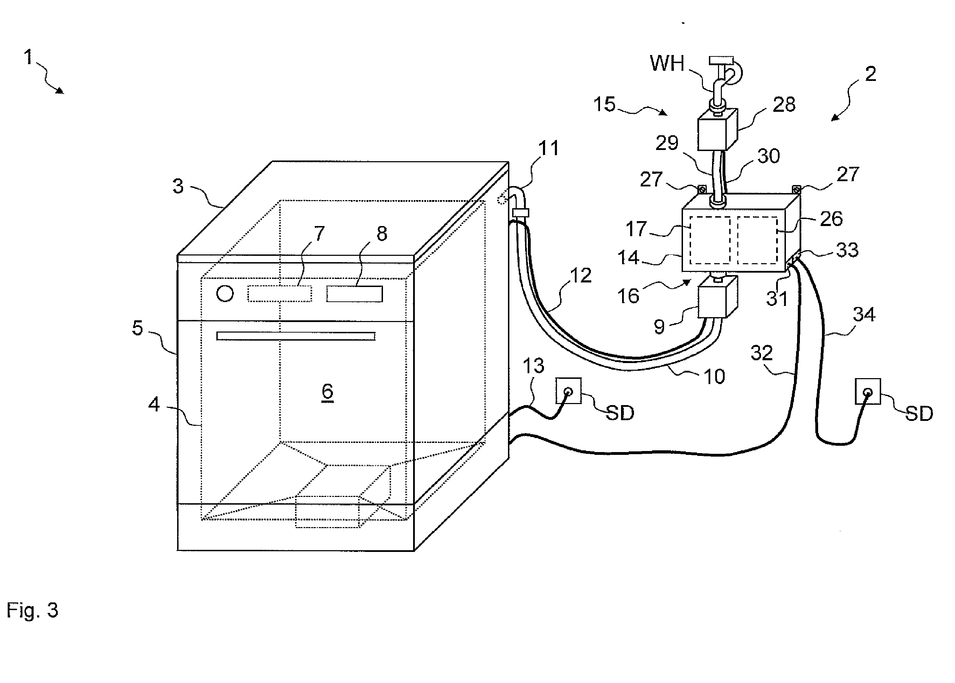

Figur 3 zeigt ein zweites Ausführungsbeispiel einer erfindungsgemäßen Anordnung mit einer Geschirrspülmaschine 1 und mit einem Desinfektionsmodul 2. Im Folgenden werden lediglich die Unterschiede zum vorherigen Ausführungsbeispiel erläutert.

Gemäß Figur 3 weist das Desinfektionsmodul 2 jetzt abweichend vom ersten Ausführungsbeispiel zusätzlich einen Vorratsbehälter 26 für Rohwasser auf. Der Vorratsbehälter 26 weist dabei ein Fassungsvolumen für Rohwasser auf, welches insbesondere derjenigen Menge an Rohwasser entspricht, die für den jeweiligen wasserführenden Teilspülgang eines Spülgangs der Geschirrspülmaschine 1 benötigt wird. Der Vorratsbehälter 26 ermöglicht eine zeitliche Entkoppelung der Aufnahme von Rohwasser über den Rohwasserzulauf 15 und der Abgabe von Rohwasser über den Wasserablauf 16. Da das Desinfektionsmodul 2 der Figur 3 zumindest bei gefülltem Vorratsbehälter 26 ein höheres Gewicht als das Desinfektionsmodul 2 des vorherigen Ausführungsbeispiels aufweist, ist hier im Ausführungsbeispiel insbesondere eine Wandmontage des Desinfektionsmoduls 2 vorgesehen. Hierzu sind an dem Gehäuse 14 Befestigungsabschnitte 27 vorgesehen, welche als Befestigungslaschen mit Befestigungslöchern ausgebildet sind. Die Befestigungslöcher erlauben eine Befestigung des Desinfektionsmoduls 2 mittels Schrauben, Haken oder dergleichen, beispielweise an einer Schrankwand oder an einer gebäudeseitigen Wand.

Im Ausführungsbeispiel der Figur 3 umfasst der Rohwasserzulauf 15 des Desinfektionsmoduls 2 ein Zulaufventil 28, welches über eine Schraubverbindung, eine Bajonettverbindung oder dergleichen unmittelbar am Wasserhahn WH befestigt ist. Stromabwärts des Zulaufventils 28 ist eine Verbindungsleitung 29 vorgesehen, welche es ermöglicht, Rohwasser zur Desinfektionseinrichtung 17 zu leiten. Das Zulaufventil 28 ist dabei über eine Steuerleitung 30 mit einer in Figur 3 nicht gezeigten Steuereinrichtung des Desinfektionsmoduls 2 verbunden. Das Zulaufventil 28 des Desinfektionsmoduls 2 ist analog zum Zulaufventil 9 der Geschirrspülmaschine 1 ausgebildet. Ebenso ist die Verbindungsleitung 29 analog zum Wasserzulaufschlauch 10 der Geschirrspülmaschine 1 ausgebildet. In Verbindung mit der in Figur 3 nicht gezeigten Steuereinrichtung des Desinfektionsmoduls 2 und einem damit verbundenen ebenfalls nicht gezeigten Leckwassersensor, kann so ein größerer Austritt von Leckwasser im Bereich des Desinfektionsmoduls 2 verhindert werden.

Das Desinfektionsmodul 2 weist ferner einen Anschluss 31 für eine Steuerleitung 32 auf, welche mit der Steuereinrichtung 7 der Geschirrspülmaschine 1 verbunden ist. Der Anschluss 31 ist mit der nicht gezeigten Steuereinrichtung des Desinfektionsmoduls 2 verbunden, so dass die Steuereinrichtung des Desinfektionsmoduls 2 und die Steuereinrichtung 7 der Geschirrspülmaschine 1, vorzugsweise bidirektional, miteinander kommunizieren können.

Ferner weist das Desinfektionsmodul 2 einen weiteren Anschluss 33 für ein Netzkabel 34 auf. Das Netzkabel 34 ist bestimmungsgemäß mit einer externen Energieversorgung verbunden, welche als haushaltsübliche Steckdose SD ausgebildet ist. Auf diese Weise kann das Desinfektionsmodul 2 selbständig elektrische Energie beziehen und ist insoweit unabhängig von der Geschirrspülmaschine 1.

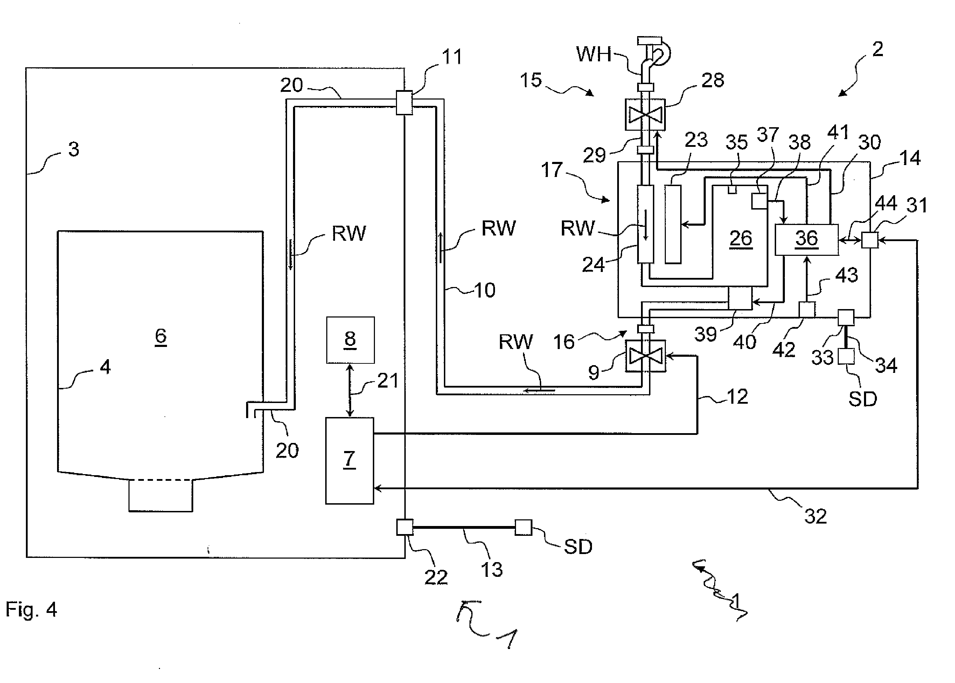

Figur 4 zeigt eine Funktionsskizze des Ausführungsbeispiels der Figur 3. Der Vorratsbehälter 26 für Rohwasser RW ist stromabwärts der Desinfektionseinrichtung 17 angeordnet, so dass der Vorratsbehälter 26 mit bereits desinfiziertem Rohwasser RW befüllt werden kann. Um ein Befüllen des Vorratsbehälters 26 zu erleichtern, ist dabei an einem oberen Ende des Vorratsbehälters 26 eine Belüftung 35 vorgesehen.

Die Befüllung des Vorratsbehälters 26 wird durch die bereits erwähnte Steuereinrichtung 36 des Desinfektionsmoduls 2 gesteuert. Zum Befüllen des Vorratsbehälters 26 gibt die Steuereinrichtung 36 Steuerbefehle über die Steuerleitung 30 an das Zulaufventil 28 des Desinfektionsmoduls 2. Der Füllstand des Vorratsbehälters 26 wird dabei mittels eines Füllstandssensors 37 überwacht, der Messsignale über eine Messleitung 38 zur Steuereinrichtung 36 überträgt. Um den Vorratsbehälter 26 wieder entleeren zu können, ist eine Pumpe 39 vorgesehen, welche durch die Steuereinrichtung 36 über eine Steuerleitung 40 steuerbar ist. Die Pumpe 39 ist ausgangsseitig mit dem Rohwasserablauf 16 des Desinfektionsmoduls 2 verbunden.

Weiterhin ist die Steuereinrichtung 36 zur Steuerung der UV-Strahlungsquelle 23, insbesondere eine Gasentladungslampe ausgebildet. Hierzu ist die Steuereinrichtung 36 über eine Steuerleitung 41 mit der UV-Strahlungsquelle 23 verbunden. Weiterhin ist ein Leckewassersensor 42 vorgesehen, der über eine weitere Steuerleitung 43 mit der Steuereinrichtung 36 des Desinfektionsmoduls verbunden ist.

Ferner ist eine Steuerleitung 44 vorgesehen, welche den Anschluss 31 mit der Steuereinrichtung 36 des Desinfektionsmoduls verbindet. Die Steuerleitung 32 und die Steuerleitung 44 ermöglichen dabei vorzugsweise eine bidirektionale Kommunikation zwischen der Steuereinrichtung 36 des Desinfektionsmoduls 2 und der Steuereinrichtung 7 der Geschirrspülmaschine 1. Ggf. kann es auch genügen, nur unidirektional Steuerbefehle von der Steuereinrichtung 7 der Geschirrspülmaschine an die Steuereinrichtung 36 des Desinfektionsmoduls über die Steuerleitungen 32, 44 zu übertragen.

Bei der Anordnung des anhand der Figuren 3 und 4 beschriebenen Ausführungsbeispiels kann nun insbesondere folgende Funktionsweise vorgesehen sein, bei der die Steuereinrichtung 36 das Desinfektionsmodul 2 teilautonom steuert.

So kann beispielsweise vorgesehen sein, dass die Steuereinrichtung 36 das Zulaufventil 28 anhand der Signale des Füllstandssensors 37 so steuert, dass der Vorratsbehälter 26 bei der erstmaligen Inbetriebnahme und/oder nach einer Entnahme von Rohwasser RW aufgefüllt wird. Die Steuerung des Zulaufventils 28 kann dabei anhand der Signale des Füllstandsensors 37 erfolgen. Beim Auffüllen des Vorratsbehälters 26 wird das neu aufgenommene Rohwasser RW zwangsweise durch das Glasrohr 24 geführt. Dabei steuert die Steuereinrichtung 36 die UV-Strahlungsquelle 23 so, dass das neu aufgenommene Rohwasser RW während seiner Aufnahme desinfiziert wird. Auf diese Weise steht praktisch zu jedem Zeitpunkt im Vorratsbehälter 26 eine Menge an desinfiziertem Rohwasser RW zur Verfügung, welche für den jeweiligen Teilspülgang eines Spülgangs der Geschirrspülmaschine 1 ausreichend ist.

Wenn bei der Geschirrspülmaschine 1 eine bestimmte Rohwassermenge für den jeweiligen Teilspülgang eines Spülgangs benötigt wird, sendet die Steuereinrichtung 7 der Geschirrspülmaschine 1 ein entsprechendes Datensignal zur Steuereinrichtung 36 des Desinfektionsmoduls 2. Gleichzeitig veranlasst die Steuereinrichtung 7 der Geschirrspülmaschine 1 die Öffnung des Zulaufventils 9 der Geschirrspülmaschine 1. Die Steuereinrichtung 36 des Desinfektionsmoduls 2 schaltet dann die Pumpe 39 ein, so dass das zuvor im Vorratsbehälter 26 befindliche desinfizierte Rohwasser RW über die Pumpe 39, über den Rohwasserablauf 26, über das Zulaufventil 9, über den Wasserzulaufschlauch 10, und über das gerätefeste Anschlussstück 11 ins Innere der Geschirrspülmaschine 1 gelangen kann.

Sofern im Bereich des Desinfektionsmoduls 2 schadensbedingt Leckwasser auftritt, wird dies mittels des Leckwassersensors 42 detektiert. Dieser übermittelt daraufhin ein entsprechendes Signal an die Steuereinrichtung 36. Diese kann dann die elektrischen Einrichtungen des Desinfektionsmoduls 2 zumindest teilweise stromlos setzen, um Kurzschlüsse zu verhindern. Zudem kann das Zulaufventil 28 geschlossen werden oder wenn es bereits geschlossen ist, in der Geschlossenstellung blockiert werden. Auf diese Weise wird eine weitere Aufnahme von Rohwasser RW verhindert, welches an der schadhaften Stelle zusätzlich als Leckwasser aus dem Desinfektionsmodul 2 austreten könnte. Bei einem Auftreten von Leckwasser kann die Steuereinrichtung 36 des Desinfektionsmoduls 2 zusätzlich ein Signal an die Steuereinrichtung 7 der Geschirrspülmaschine senden, so dass diese darauf reagieren kann, dass eine planmäßige Aufnahme von desinfiziertem Rohwasser RW von dem Desinfektionsmodul 2 nicht mehr möglich ist. Ggf. kann das Zulaufventil 28 auch entfallen. Insbesondere kann das Desinfektionsmodul auch direkt an den Wasserhahn WH angekoppelt werden. Zusätzlich oder unabhängig hiervon kann ggf. auch das Zulaufventil 9 entfallen, falls keine Einlaufwasserabsicherung gewünscht ist.

Die Erfindung betrifft in einem vorteilhaften Ausführungsbeispiel insbesondere ein Desinfektions- bzw. Hygienemodul, welches die Sterilisation von verkeimtem Frischwasser ermöglicht. Das Hygienemodul kann vorzugsweise zwischen einem Hausanschluss und einem Aquastop-Ventil der Geschirrspülmaschine eingebaut sein. Der Zulauf des Frischwassers zur Geschirrspülmaschine kann direkt oder über einen Vorratsbehälter erfolgen.

Dieses Hygiene- bzw. Desinfektionsmodul kann vorzugsweise mittels der Steuereinrichtung der Geschirrspülmaschine während des Spülgangs eines gewählten Geschirrspülprogramms derart angesteuert werden, dass es als Durchlaufhygienemodul arbeitet und jeweils die für den jeweiligen Teilspülgang des durchzuführenden Spülgangs spezifisch gewünschte Zulauf-Wassermenge aus der externen Wasserversorgung desinfiziert, d. h. in einem hygienisch einwandfreien Zustand bringt, und dieses desinfizierte, insbesondere sterilisierte Rohwasser dem Inneren der Geschirrspülmaschine zuführt. Dabei ist das Hygienemodul vorzugsweise so ausgebildet, dass es als separates Bauteil außerhalb, d.h. extern von der Geschirrspülmaschine in deren Wasserzulaufleitung eingefügt werden kann. Dadurch ist eine jederzeitige Nachrüstbarkeit verschiedener Typen von Geschirrspülmaschinen in vorteilhafter Weise möglich, ohne dass es erforderlich ist, besondere konstruktive Maßnahmen oder Platz im Inneren der jeweiligen Geschirrspülmaschine vorzusehen.

Alternativ kann nach einer vorteilhaften Ausführungsvariante sogar die Steuereinrichtung im Hygienemodul und dessen Ansteuerung durch die Steuereinrichtung der Geschirrspülmaschine entfallen, wenn das Hygienemodul in Zuflussrichtung betrachtet hinter bzw. nach dem Zulaufventil, insbesondere Aquastopventil wie z.B. 28 angeordnet ist, das am Wasserhahn der externen Wasserversorgung angebracht ist. Dann genügt es, wenn die Steuereinrichtung der Geschirrspülmaschine lediglich dieses Zulaufventil über eine Steuerleitung ansteuert, insbesondere entsprechend öffnet und schließt. Ein einziges Zulaufventil, insbesondere Aquastopventil, genügt dann bereits.

Falls das Desinfektionsmodul in Abwandlung hiervon zusätzlich über mindestens einen Vorratsbehälter verfügt, kann desinfiziertes Rohwasser in ihm zwischengespeichert und bevorratet werden. Dieses kann dann erst bei Bedarf über die Wasserzulaufleitung der Geschirrspülmaschine in deren Pumpensumpf oder ein sonstiges wasserführendes Bauteil eingelassen werden. Insbesondere kann es zweckmäßig sein, den Vorratsbehälter so zu dimensionieren, das die in ihm zwischenspeicherbare desinfizierte Rohwassermenge zumindest der Zudosiermenge entspricht, die für den jeweiligen Teilspülgang eines durchzuführenden Spülgangs eines gewählten Geschirrspülprogramms gefordert ist.
Ggf. kann er auch so groß ausgebildet sein, dass es das Gesamtvolumen an desinfiziertem Wasser für alle Teilspülgänge des jeweilig durchzuführenden Spülgangs fassen kann.

Wenn das Hygienemodul als Durchlaufvorrichtung ohne Vorratsbehälter ausgebildet ist, sind in der Praxis für seine Höhe ca. 250 mm, seine Breite ca. 80 mm, sowie seine Tiefenerstreckung ca. 50 mm gewählt. Falls das Hygienemodul zusätzlich einen eigenen Vorratsbehälter aufweist, so sind seine Abmessungen gegenüber dem Durchlaufhygienemodul vergrößert. Seine Höhe kann zweckmäßigerweise ca. 300 mm, seine Breite ca. 150 mm und seine Tiefenerstreckung ca. 100 mm gewählt sein.

### Bezugszeichenliste

- 1: Geschirrspülmaschine
- 2: Desinfektionsmodul
- 3: Gehäuse
- 4: Spülbehälter
- 5: Türe
- 6: Spülkammer
- 7: Steuereinrichtung
- 8: Bedienschnittstelle
- 9: Zulaufventil
- 10: Wasserzulaufleitung, Wasserzulaufschlauch
- 11: gerätefestes Anschlussstück
- 12: Steuerleitung für Zulaufventil
- 13: Netzkabel
- 14: Gehäuse
- 15: Rohwasserzulauf
- 16: Rohwasserablauf
- 17: Desinfektionseinrichtung
- 18: Anschluss für Steuerleitung
- 19: Steuerleitung
- 20: Leitung
- 21: Datenleitung
- 22: Netzanschluss der Geschirrspülmaschine
- 23: UV-Strahlungsquelle, insbesondere Gasentladungslampe
- 24: UV-strahlungsdurchlässige Leitung, Glasrohr
- 25: Steuerleitung
- 26: Vorratsbehälter
- 27: Befestigungsabschnitte
- 28: Zulaufventil
- 29: Verbindungsleitung
- 30: Steuerleitung
- 31: Anschluss
- 32: Steuerleitung
- 33: Anschluss
- 34: Netzkabel
- 35: Belüftung
- 36: Steuereinrichtung
- 37: Füllstandssensor
- 38: Messleitung
- 39: Pumpe
- 40: Steuerleitung
- 41: Steuerleitung
- 42: Leckwassersensor
- 43: Steuerleitung
- 44: Steuerleitung

- WH: externe Wasserversorgung, Wasserhahn
- SD: externe Energieversorgung, Steckdose
- RW: Rohwasser

## Patentansprüche

1. Desinfektionsmodul zur Desinfektion von Rohwasser (RW) für eine Geschirrspülmaschine (1), insbesondere von Rohwasser (RW) für eine Haushaltsgeschirrspülmaschine (1), **dadurch gekennzeichnet, dass** es als eine außerhalb der Geschirrspülmaschine (1), insbesondere separat, anordenbare Baueinheit (2) ausgeführt ist, welche einen Rohwasserzulauf (15), der zur Aufnahme von Rohwasser (RW) mit einer externen Wasserversorgung (WH) verbindbar ist, eine Desinfektionseinrichtung (17) zur Desinfektion des aufgenommenen Rohwassers (RW), sowie einen Rohwasserablauf (16), der zur Abgabe des desinfizierten Rohwassers (RW) mit der Geschirrspülmaschine (1) verbindbar ist, umfasst.

2. Desinfektionsmodul nach einem der vorstehenden Ansprüche, **dadurch gekennzeichnet, dass** die Desinfektionseinrichtung (17) zur Desinfektion des Rohwassers (RW) nach einem physikalischen Prinzip ausgebildet ist.

3. Desinfektionsmodul nach einem der vorstehenden Ansprüche, **dadurch gekennzeichnet, dass** die Desinfektionseinrichtung (17) eine UV-Strahlungsquelle (23) zur Bestrahlung des aufgenommenen Rohwassers (RW) aufweist.

4. Desinfektionsmodul nach einem der vorstehenden Ansprüche, **dadurch gekennzeichnet, dass** es wenigstens einen Anschluss (18, 31) zum Anschließen einer mit einer Steuereinrichtung (7) der Geschirrspülmaschine (1) verbundenen Steuerleitung (19, 32) aufweist.

5. Desinfektionsmodul nach Anspruch 4, **dadurch gekennzeichnet, dass** der Anschluss (18) mit einem Aktor (23) des Desinfektionsmoduls (2) verbunden ist.

6. Desinfektionsmodul nach einem der Ansprüche 4 oder 5, **dadurch gekennzeichnet, dass** der Anschluss (31) mit einer Steuereinrichtung (36) des Desinfektionsmoduls (2) verbunden ist.

7. Desinfektionsmodul nach einem der vorstehenden Ansprüche, **dadurch gekennzeichnet, dass** es als Durchlaufdesinfektionsmodul (2) ausgebildet ist.

8. Desinfektionsmodul nach einem der vorstehenden Ansprüche, **dadurch gekennzeichnet, dass** der Rohwasserzulauf (15) ein steuerbares Zulaufventil (28) aufweist.

9. Desinfektionsmodul nach einem der Ansprüche 1 bis 6, **dadurch gekennzeichnet, dass** ein Vorratsbehälter (26) zum Speichern von aufgenommenem Rohwasser (RW) vorgesehen ist.

10. Desinfektionsmodul nach Anspruch 9, **dadurch gekennzeichnet, dass** dem Vorratsbehälter (26) ein Füllstandssensor (37) zugeordnet ist.

11. Desinfektionsmodul nach einem der Ansprüche 9 oder 10, **dadurch gekennzeichnet, dass** eine Pumpe (39) zum Abpumpen von im Vorratsbehälter (26) gespeichertem Rohwasser (RW) vorgesehen ist, welche ausgangsseitig mit dem Rohwasserablauf (16) verbunden ist.

12. Geschirrspülmaschine, insbesondere Haushaltsgeschirrspülmaschine (1), mit einer Steuereinrichtung (7) zur Steuerung von Spülgängen zum Reinigen von Spülgut, **dadurch gekennzeichnet, dass** sie eine Wasserzulaufeinrichtung (9, 10, 11) aufweist, welche zur Aufnahme von Rohwasser (RW) mit einem Desinfektionsmodul (2) nach wenigstens einem der Ansprüche 1 bis 11 verbindbar ist, wobei die Steuereinrichtung (7) zur Steuerung des Desinfektionsmoduls (2) ausgebildet ist.

13. Geschirrspülmaschine nach einem der vorstehenden Ansprüche, **dadurch gekennzeichnet, dass** die Steuereinrichtung (7) zum Steuern wenigstens eines Aktors (23) des Desinfektionsmoduls (2) ausgebildet ist

14. Geschirrspülmaschine nach einem der vorstehenden Ansprüche, **dadurch gekennzeichnet, dass** die Steuereinrichtung (7) zur Kommunikation mit einer Steuereinrichtung (36) des Desinfektionsmoduls (2) ausgebildet ist.

15. Geschirrspülmaschine nach einem der vorstehenden Ansprüche, **dadurch gekennzeichnet, dass** das Desinfektionsmodul (2) zwischen einer Wasserausgabeeinheit, insbesondere einem Wasserhahn (WH), einer externen Wasserversorgung und einem steuerbaren Zulaufventil (9), insbesondere Aquastopventil, am zulaufseitigen Endabschnitt einer Wasserzulaufeinrichtung (10) der Geschirrspülmaschine (1) eingefügt ist.

16. Anordnung mit einer Geschirrspülmaschine (1), insbesondere mit einer Haushaltsgeschirrspülmaschine (1), und mit einem Desinfektionsmodul (2) zur Desinfektion von Rohwasser (RW) für die Geschirrspülmaschine (1), **dadurch gekennzeichnet, dass** die Geschirrspülmaschine (1) nach wenigstens einem der Ansprüche 12 bis 15 und/oder das Desinfektionsmodul (2) zur Desinfektion von Rohwasser (RW) nach wenigstens einem der Ansprüche 1 bis 11 ausgebildet ist.
